# DEMANDE DE BREVET EUROPEEN

(11) **EP 4 477 435 A1**
(43) Date de publication de la demande: **18.12.2024**
(21) Numéro de dépôt: 24182091.9
(22) Date de dépôt: 13.06.2024
(51) Int. Cl.: B60J 5/04

(54) **DISPOSITIF DE GESTION DE CONTACT POUR VÉHICULE AUTOMOBILE À PORTES ANTAGONISTES**

(30) Priorité: 16.06.2023 FR 2306165
(71) Demandeur: Renault s.a.s, 92100 Boulogne Billancourt (FR)
(72) Inventeur: MINSSEN, Eric, 78280 GUYANCOURT (FR)

(57) **Abrégé**

La présente invention concerne un véhicule automobile (1) comprenant une caisse (6) et au moins deux ouvrants (8, 10) latéraux antagonistes montés sur la caisse (6) parmi lesquels un ouvrant avant (8) et un ouvrant arrière (10), ces ouvrants (8, 10) étant configurés pour prendre une première position dans laquelle ils sont fermés et une deuxième position dans laquelle ils sont ouverts, le véhicule automobile (1) comprenant un dispositif de gestion d'un contact (18) entre les ouvrants (8, 10) comprenant au moins une portion élastiquement déformable (20) solidaire de l'un des ouvrants (8, 10), la portion élastiquement déformable (20) étant configurée pour éloigner les ouvrants (8, 10) l'un par rapport à l'autre.

## Description

La présente invention concerne le domaine des véhicules automobiles à ouvrants antagonistes, et plus particulièrement des mécanismes permettant de gérer les contacts lors de l'ouverture des ouvrants de tels véhicules automobiles.

Les ouvrants antagonistes, ou portes antagonistes, correspondent à des ouvrants latéraux d'un véhicule automobile qui s'ouvrent en regard l'un de l'autre. Par exemple, l'ouvrant avant s'ouvre en pivotant autour d'un axe disposé à l'avant de cet ouvrant avant, tandis que l'ouvrant arrière s'ouvre en pivotant autour d'un axe disposé à l'arrière de cet ouvrant arrière, les qualifications « avant » et « arrière » des ouvrants étant appréciées par rapport à un avant et un arrière du véhicule automobile.

L'ouvrant avant et l'ouvrant arrière peuvent reposer, lorsqu'ils sont fermés, sur un pied milieu du véhicule automobile. Toutefois, certains véhicules automobiles ne présentent pas un tel pied milieu, de sorte à permettre un large accès à un habitacle du véhicule automobile et notamment à faciliter l'installation des passagers au sein de cet habitacle.

Pour ces véhicules, l'ouvrant avant est usuellement refermé au moins partiellement sur l'ouvrant arrière. Il est ainsi nécessaire que, lors de la fermeture des ouvrants, l'ouvrant arrière soit fermé préalablement à l'ouvrant avant, et à l'inverse que lors de leur ouverture l'ouvrant avant soit ouvert préalablement à l'ouvrant arrière.

L'ouverture des ouvrants peut notamment résulter d'une action d'un passager installé à l'arrière du véhicule automobile. Pour sortir de ce véhicule, le passager arrière doit alors pousser l'ouvrant arrière en regard duquel il est installé, celui-ci poussant à son tour l'ouvrant avant pour permettre la sortie du passager arrière.

La poussée de l'ouvrant arrière contre l'ouvrant avant entraîne cependant des contacts entre les deux ouvrants comme par exemple des frottements, ce qui pose un risque d'endommagement des tôleries, des joints et/ou des éléments participant aux mécanismes d'ouverture des deux ouvrants.

La présente invention vise à pallier cet inconvénient en proposant un véhicule automobile au sein duquel, à l'ouverture des ouvrants, de potentielles dégradations résultant d'un contact entre ces ouvrants sont limitées grâce à un système permettant de contrôler les frottements entre les ouvrants.

La présente invention a ainsi pour principal objet un véhicule automobile comprenant une caisse et au moins deux ouvrants latéraux antagonistes montés sur la caisse parmi lesquels un ouvrant avant et un ouvrant arrière, ces ouvrants étant configurés pour prendre une première position dans laquelle ils sont fermés et une deuxième position dans laquelle ils sont ouverts, le véhicule automobile comprenant un dispositif de gestion d'un contact entre les ouvrants comprenant au moins une portion élastiquement déformable solidaire de l'un des ouvrants, la portion élastiquement déformable étant configurée pour éloigner les ouvrants l'un par rapport à l'autre.

Le véhicule automobile selon l'invention comporte deux ouvrants antagonistes, qui sont montés pivotants sur une caisse du véhicule. Le véhicule automobile comprend par exemple deux ouvrants antagonistes de son côté latéral droit et deux ouvrants antagonistes de son côté latéral gauche. De tels ouvrants antagonistes présentent des points de pivotement respectivement disposés sur la caisse à des extrémités opposées à une portion centrale du véhicule automobile au niveau de laquelle les ouvrants se rejoignent.

L'ouvrant avant comme l'ouvrant arrière sont configurés pour prendre soit une première position ou position fermée, soit une deuxième position ou position ouverte, un passage de l'une à l'autre des positions étant opéré par un pivotement de l'ouvrant. On considère que les ouvrants sont dans leur première position lorsqu'ils sont verrouillés sur la caisse du véhicule automobile, et qu'ils sont dans leur deuxième position dès lors qu'ils ne sont plus au contact l'un de l'autre. Il existe ainsi une pluralité de positionnements de l'ouvrant entre la première position et la deuxième position, chacun de ces positionnements correspondant à un angle d'inclinaison différent de l'ouvrant par rapport à une direction d'extension principale du véhicule automobile.

Le véhicule automobile est dépourvu de pied milieu entre les deux ouvrants ; en d'autres termes, le véhicule automobile ne comprend pas de longeron central et/ou vertical sur lequel reposeraient les ouvrants dans leur position fermée.

Au cours du passage des ouvrants de leur position fermée à leur position ouverte, les ouvrants sont libérés l'un par rapport à l'autre dès lors que la serrure des ouvrants est déverrouillée. Les ouvrants sont alors toujours au contact l'un de l'autre, un utilisateur passager du véhicule devant effectuer une poussée supplémentaire sur les ouvrants pour s'extraire de l'habitacle. Durant cette poussée, les ouvrants frottent l'un contre l'autre. à titre d'exemple, lorsqu'un passager arrière du véhicule automobile souhaite sortir de celui-ci, il déverrouille les ouvrants qui quittent leur première position, puis il effectue une poussée sur l'ouvrant arrière qui à son tour effectue une poussée sur l'ouvrant avant pour que les ouvrants passent dans leur deuxième position.

Le véhicule automobile comprend un dispositif de gestion d'un contact entre les ouvrants, qui est destiné à régir les frottements entre ces deux ouvrants et plus particulièrement à limiter les risques d'endommagement des ouvrants lors de leur ouverture. Le dispositif de gestion de contact présente à cet effet une portion élastiquement déformable, qui en se déformant est configurée pour éloigner les ouvrants l'un de l'autre. Un tel éloignement des ouvrants résulte de rotations autour de leurs points de pivotement. L'éloignement des ouvrants s'entend indifféremment de l'éloignement de l'ouvrant avant par rapport à l'ouvrant arrière ou de l'éloignement de l'ouvrant arrière par rapport à l'ouvrant avant.

En fonction des modes de réalisation, la portion élastiquement déformable du dispositif de gestion de contact est positionnée en différentes zones du véhicule automobile ; cette portion élastiquement déformable est ainsi soit sur l'ouvrant avant, soit sur l'ouvrant arrière.

Selon une caractéristique optionnelle de l'invention, la portion élastiquement déformable présente une première configuration de repos et une deuxième configuration rétractée, la portion élastiquement déformable passant au moins de sa première configuration à sa deuxième configuration lors du passage des ouvrants de leur première position à leur deuxième position.

La portion élastiquement déformable est dans sa première configuration de repos ou dans sa deuxième configuration rétractée en fonction d'une pression exercée l'un des ouvrants sur l'autre ouvrant qui est porteur de la portion élastiquement déformable. Au cours de l'ouverture des ouvrants, ceux-ci frottent l'un contre l'autre ce qui génère une pression sur la portion élastiquement déformable. La portion élastiquement déformable passe au moins de sa première configuration à sa deuxième configuration lors de l'ouverture des ouvrants. Plus particulièrement, la portion élastiquement déformable est dans sa première configuration dans la position fermée des ouvrants, dans sa deuxième configuration lorsque les ouvrants frottent l'un sur l'autre, puis elle revient dans sa première configuration lorsque les ouvrants sont à distance l'un de l'autre, c'est-à-dire dans leur deuxième position.

Selon une caractéristique optionnelle de l'invention, l'ouvrant dont est solidaire la portion élastiquement déformable comprend une feuillure avant et une feuillure arrière, la portion élastiquement déformable étant solidaire de l'une des feuillures.

La disposition des feuillures avant et arrière de l'ouvrant avant est appréciée par rapport à un avant et un arrière du véhicule automobile. Ces feuillures correspondent à des tranches des ouvrants.

Selon une caractéristique optionnelle de l'invention, la portion élastiquement déformable est solidaire de la feuillure avant de l'ouvrant arrière.

Selon une caractéristique optionnelle de l'invention, la portion élastiquement déformable est solidaire de la feuillure arrière de l'ouvrant avant.

Il existe deux modes de réalisation distincts de l'invention, avec un premier mode de réalisation dans lequel la portion élastiquement déformable est solidaire de l'ouvrant arrière et un deuxième mode de réalisation dans lequel elle est solidaire de l'ouvrant avant. Dans chacun de ces deux modes de réalisation, la portion élastiquement déformable est disposée sur la feuillure de l'ouvrant qui est au contact de l'autre ouvrant lorsque ceux-ci sont dans leur position fermée ; il s'agit de la feuillure avant pour l'ouvrant arrière et de la feuillure arrière pour l'ouvrant avant.

Selon une caractéristique optionnelle de l'invention, le dispositif de gestion de contact comprend une portion de frottement destinée à coopérer, lors du passage des ouvrants de leur première position à leur deuxième position, avec la portion élastiquement déformable.

Une telle portion de frottement est par exemple un talon de frottement. Elle est réalisée en un matériau susceptible d'accepter des frottements pendant toute une durée de vie du véhicule. Par « coopérer », on entend ici qu'au moins une partie de la portion élastiquement déformable glisse le long de la portion de frottement.

Selon une caractéristique optionnelle de l'invention, l'ouvrant avant comprend une feuillure avant et une feuillure arrière en regard de la feuillure avant de l'ouvrant arrière, la portion de frottement étant solidaire de la feuillure arrière de l'ouvrant avant.

Il s'agit ici du premier mode de réalisation : la portion élastiquement déformable est solidaire de l'ouvrant arrière et la portion de frottement est solidaire de l'ouvrant avant, ces portions étant respectivement disposées sur la feuillure avant de l'ouvrant arrière et sur la feuillure arrière de l'ouvrant avant, lesdites feuillures étant en regard l'une de l'autre et au contact l'une de l'autre dans la première position fermée des ouvrants.

Selon une caractéristique optionnelle de l'invention, l'ouvrant arrière comprend une feuillure arrière et une feuillure avant en regard de la feuillure arrière de l'ouvrant avant, la portion de frottement étant solidaire de la feuillure avant de l'ouvrant arrière.

Il s'agit ici du deuxième mode de réalisation : la portion élastiquement déformable est solidaire de l'ouvrant avant et la portion de frottement est solidaire de l'ouvrant arrière, ces portions étant respectivement disposées sur la feuillure arrière de l'ouvrant avant et sur la feuillure avant de l'ouvrant arrière, lesdites feuillures étant en regard l'une de l'autre et au contact l'une de l'autre dans la première position fermée des ouvrants.

Selon une caractéristique optionnelle de l'invention, la portion élastiquement déformable comprend un doigt d'éjection.

Ce doigt d'éjection correspond à une partie de la portion élastiquement déformable capable de se rétracter pour que cette portion élastiquement déformable passe de la première configuration à la deuxième configuration.

Selon une caractéristique optionnelle de l'invention, la portion élastiquement déformable comprend un ressort.

La portion élastiquement déformable est alors dans sa première configuration de repos lorsque le ressort est détendu et elle est dans sa deuxième configuration rétractée lorsque le ressort est comprimé. Lorsque la portion élastiquement déformable comprend un doigt d'éjection, ce doigt d'éjection est équipé du ressort.

Selon une caractéristique optionnelle de l'invention, le doigt d'éjection est motorisé.

Le passage de la portion élastiquement déformable de sa première à sa deuxième configuration et inversement est alors assuré par un moteur.

Selon une caractéristique optionnelle de l'invention, la portion élastiquement déformable comprend un galet tournant disposé à une extrémité du doigt d'éjection.

Le galet tournant est monté pivotant selon un axe sensiblement parallèle à un axe perpendiculaire au sol sur lequel repose le véhicule. Ce galet tournant est plus particulièrement disposé à l'extrémité du doigt d'éjection qui est en regard de l'ouvrant qui ne porte pas la portion élastiquement déformable.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, une vue de profil d'un véhicule automobile selon l'invention, présentant deux ouvrants antagonistes dont un ouvrant avant et un ouvrant arrière ;
[Fig. 2] illustre, schématiquement, les ouvrants antagonistes vus de l'intérieur du véhicule automobile de la figure 1, ces ouvrants antagonistes étant équipés d'un dispositif de gestion de contact ;
[Fig. 3] illustre, schématiquement, un passage des ouvrants antagonistes de la figure 1 d'une position fermée à une position ouverte, les ouvrants étant représentés en coupe selon une vue de dessus et le dispositif de gestion de contact étant selon un premier mode de réalisation, l'ouvrant avant étant représenté depuis un intérieur du véhicule automobile et l'ouvrant arrière étant représenté depuis un extérieur du véhicule ;
[Fig. 4] illustre, schématiquement, un deuxième mode de réalisation du dispositif de gestion de contact de la figure 2.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « verticale » et « transversale » se réfèrent à l'orientation du véhicule automobile selon l'invention. Une direction longitudinale correspond à une direction d'extension principale du véhicule automobile, cette direction longitudinale étant parallèle à un axe longitudinal L d'un repère L, V, T illustré sur les figures. Une direction verticale correspond à une direction sensiblement perpendiculaire à un sol sur lequel repose le véhicule automobile, cette direction verticale étant parallèle à un axe vertical V du repère L, V, T et cet axe vertical V étant perpendiculaire à l'axe longitudinal L. Enfin, une direction transversale correspond à une direction parallèle à un axe transversal T du repère L, V, T, cet axe transversal T étant perpendiculaire à l'axe longitudinal L et à l'axe vertical V.

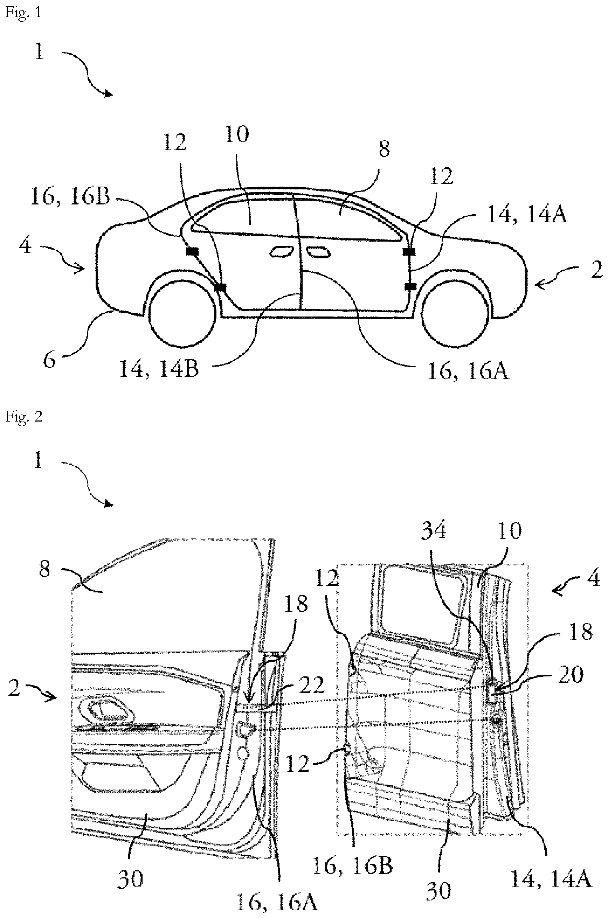

La figure 1 illustre ainsi, schématiquement, un véhicule automobile 1 selon l'invention, ce véhicule automobile 1 étant représenté depuis l'extérieur selon une vue de profil. Le véhicule automobile 1 s'étend selon une direction d'extension principale qui correspond à une direction longitudinale L. Le véhicule automobile 1 est délimité, le long de cette direction longitudinale, par une première extrémité longitudinale 2 et une deuxième extrémité longitudinale 4. La première extrémité longitudinale 2 correspond à un avant du véhicule automobile 1, notamment en regard d'un poste de conduite de ce véhicule automobile 1, tandis que la deuxième extrémité longitudinale 4 correspond à son arrière, en regard d'un coffre du véhicule automobile 1 par exemple.

Le véhicule automobile 1 comprend une caisse 6 qui est un élément structurel sur lequel reposent des ouvrants 8, 10 du véhicule automobile 1. Le véhicule automobile 1 comprend, au titre de ces ouvrants 8, 10, au moins un ouvrant avant 8 et un ouvrant arrière 10. On comprend que l'ouvrant avant 8 est plus proche de la première extrémité longitudinale 4 que l'ouvrant arrière 10, et inversement que cet ouvrant arrière 10 est plus proche de la deuxième extrémité longitudinale 6 que l'ouvrant avant 8. Le véhicule automobile 1 comprend plus précisément deux ouvrants avant 8 et deux ouvrants arrière 10, disposés deux par deux de chaque côté latéral du véhicule automobile 1. Dans ce qui va suivre, les éléments décrits en relation avec une paire d'ouvrants 8, 10, soit un ouvrant avant 8 et un ouvrant arrière 10 disposés d'un côté latéral donné, sont applicables aux ouvrants 8 et 10 disposés de l'autre côté du véhicule automobile 1.

Les ouvrants 8, 10 sont plus spécifiquement des ouvrants antagonistes, c'est-à-dire des ouvrants qui s'ouvrent en regard l'un de l'autre et se rejoignent en une portion centrale du véhicule automobile 1, une telle portion centrale étant appréciée relativement à la direction longitudinale L. Les ouvrants 8, 10 sont montés pivotants sur la caisse 6 ; ainsi, l'ouvrant avant 8 présente un axe de pivotement vers la première extrémité longitudinale 2 du véhicule automobile 1, tandis que l'ouvrant arrière 10 présente un axe de pivotement vers sa deuxième extrémité longitudinale 4. Chacun des ouvrants 8, 10 pivote par rapport à la caisse 6 par l'intermédiaire de charnières 12, qui sont illustrées sous forme schématique à la figure 1.

Du fait de ce pivotement des ouvrants 8, 10 relativement à la caisse 6, l'ouvrant avant et l'ouvrant arrière 10 présentent chacun une première position dans laquelle ils sont fermés et une deuxième position dans laquelle ils sont ouverts. La première position est ainsi une position fermée et la deuxième position une position ouverte. On considère ici que les ouvrants 8, 10 présentent une position fermée lorsqu'ils sont verrouillés sur la caisse 6, et qu'ils sont dans leur position ouverte dès lors qu'ils ne sont plus au contact l'un de l'autre. Dans la première position ou position fermée, les ouvrants 8, 10 sont verrouillés l'un par rapport à l'autre et/ou par rapport à la caisse 6 du véhicule automobile 1. Entre la première position fermée et la deuxième position ouverte, les ouvrants 8, 10 se trouvent dans une position intermédiaire dans laquelle ils ne sont plus verrouillés l'un par rapport à l'autre mais ils sont toujours au contact l'un de l'autre.

Chacun des ouvrants 8, 10 comprend une feuillure avant 14 et une feuillure arrière 16, qui correspondent à des tranches de l'ouvrant 8. Plus particulièrement, l'ouvrant avant 8 comprend une feuillure avant 14A en regard de la première extrémité longitudinale 2 et une feuillure arrière 16A en regard de la deuxième extrémité longitudinale 4, et similairement l'ouvrant arrière 10 présente une feuillure avant 14B en regard de la première extrémité longitudinale 2 et une feuillure arrière 16B en regard de la deuxième extrémité longitudinale 4.

Le véhicule automobile 1 est dépourvu de pied milieu entre les ouvrants 8, 10, de sorte que dans la première position des ouvrants 8, 10, la feuillure arrière 16A de l'ouvrant avant 8 est ainsi en regard de la feuillure avant 14B de l'ouvrant arrière 10 et au contact de celle-ci. En outre, la feuillure avant 14A de l'ouvrant avant 8 et la feuillure arrière 16B de l'ouvrant arrière 10 sont porteuses des charnières 12 qui autorisent le pivotement de chacun de ces ouvrants 8, 10.

Le passage de l'ouvrant avant 8 et de l'ouvrant arrière 10 de leur première position à leur deuxième position nécessite la mise en oeuvre d'un dispositif de verrouillage et de déverrouillage des ouvrants 8, 10 qui est actionnable par un passager du véhicule automobile 1. Afin de s'extraire du véhicule automobile 1, le passager du véhicule automobile 1 doit tout d'abord actionner ce dispositif de verrouillage et déverrouillage, par exemple en actionnant une poignée intérieure du véhicule automobile 1, pour libérer des serrures des ouvrants 8, 10 qui les maintiennent en prise l'un dans l'autre. Le passager doit ensuite dégager les ouvrants 8, 10.

Selon l'invention, le véhicule automobile 1 est équipé d'un dispositif de gestion d'un contact 18 entre les ouvrants 8, 10 lors du passage de ces ouvrants 8, 10 de leur première position à leur deuxième position. Un tel dispositif de gestion de contact 18 va maintenant être décrit en relation avec les figures 2 à 4.

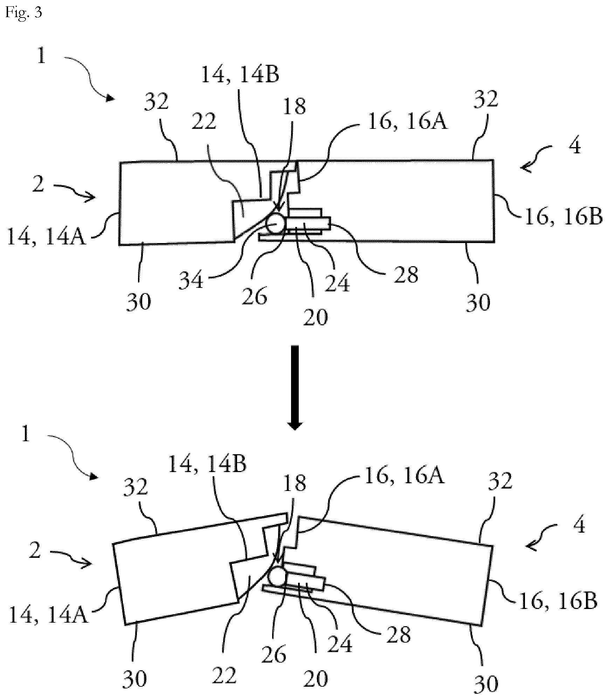

Le dispositif de gestion de contact 18 est destiné à gérer les frottements entre l'ouvrant avant 8 et l'ouvrant arrière 10. Le dispositif de gestion de contact 18 comprend à cet effet deux portions disposées chacune sur l'un des ouvrants 8, 10, avec plus précisément une portion élastiquement déformable 20 solidaire de l'un des ouvrants 8, 10 et une portion de frottement 22 solidaire de l'autre ouvrant 8, 10. Sur le mode de réalisation représenté aux figures 2 et 3, qui est un premier mode de réalisation, la portion élastiquement déformable 20 est solidaire de l'ouvrant arrière 10 et la portion de frottement 22 est solidaire de l'ouvrant avant 8, mais dans d'autres modes de réalisation non représentés ici, notamment un deuxième mode de réalisation, à l'inverse la portion élastiquement déformable 20 est solidaire de l'ouvrant avant 8 et la portion de frottement 22 est solidaire de l'ouvrant arrière 10. Les caractéristiques décrites en relation avec l'un ou l'autre de ces modes de réalisation ont vocation à s'appliquer, *mutatis mutandis* et en l'absence de mention contraire, aux autres modes de réalisation.

La portion élastiquement déformable 20 et la portion de frottement 22 sont disposées sur les feuillures des ouvrants 8, 10. Pour le premier mode de réalisation des figures 2 et 3, la portion élastiquement déformable 20 est plus particulièrement solidaire de la feuillure avant 14B de l'ouvrant arrière 10 tandis que la portion de frottement 22 est solidaire de la feuillure arrière 16A de l'ouvrant avant 8. Au contraire, dans le deuxième mode de réalisation la portion élastiquement déformable 20 est solidaire de la feuillure arrière 16A de l'ouvrant avant 8 alors que la portion de frottement 22 est solidaire de la feuillure avant 14B de l'ouvrant arrière 10.

La portion élastiquement déformable 20 et la portion de frottement 22 sont au contact l'une de l'autre dans la première position ou position fermée des ouvrants 8, 10. En outre, ces portions 20, 22 coopèrent l'une avec l'autre lors du passage des ouvrants 8, 10 de leur première position à leur deuxième position ou position ouverte, c'est-à-dire lorsque les ouvrants 8, 10 sont dans leur position intermédiaire. Une telle coopération permet de limiter les risques de détérioration des ouvrants 8, 10 au contact l'un de l'autre, notamment lors de frottements de la feuillure arrière 16A de l'ouvrant avant 8 contre la feuillure avant 14B de l'ouvrant arrière 10.

La portion de frottement 22 du dispositif de gestion de contact 18 est par exemple un talon de frottement. Elle est réalisée en un matériau capable de résister à des frottements et/ou des chocs pendant toute la durée de vie du véhicule automobile 1. La portion de frottement comprend par exemple un matériau isolant acoustiquement permettant de limiter des bruits résultant du contact entre l'ouvrant avant 8 et l'ouvrant arrière 10.

Comme cela est visible à la figure 2, la portion de frottement 22 est disposée en une portion centrale de l'ouvrant avant 8. Une telle portion centrale s'entend relativement à une direction verticale sensiblement perpendiculaire au sol sur lequel repose le véhicule automobile 1. On comprend ainsi que la portion de frottement 22 est disposée sur la feuillure arrière 16A de l'ouvrant avant 8 à distance de ses extrémités supérieure et inférieure, de telles extrémités délimitant l'ouvrant avant 8 selon la direction verticale. La portion de frottement 22 est par exemple disposée sensiblement à équidistance de l'extrémité supérieure et de l'extrémité inférieure de l'ouvrant avant 8.

La portion élastiquement déformable 20 du dispositif de gestion de contact 18 étant configurée pour coopérer avec sa portion de frottement 22, elle est disposée sur l'ouvrant arrière 10 en regard de cette portion de frottement 22. Ainsi, la portion élastiquement déformable 20 est disposée en une portion centrale de l'ouvrant arrière 10, à distance à la fois de l'extrémité supérieure et de l'extrémité inférieure de l'ouvrant avant 8, le cas échéant sensiblement à équidistance de cette extrémité supérieure et de cette extrémité inférieure. Dans la première position fermée des ouvrants 8, 10, la portion élastiquement déformable est au moins partiellement au contact de la portion de frottement 22.

La portion élastiquement déformable 20 est destinée à éloigner les ouvrants 8, 10 l'un de l'autre, lors de leur passage de leur première position à leur deuxième position. En d'autres termes, la portion élastiquement déformable 20 facilite l'ouverture des ouvrants 8, 10. À cet effet, la portion élastiquement déformable 20 se déforme afin d'éloigner l'ouvrant avant 8 de l'ouvrant arrière 10, ou inversement l'ouvrant arrière 10 de l'ouvrant avant 8. La portion élastiquement déformable 20 permet d'éloigner la feuillure arrière 16A de l'ouvrant avant 8 et/ou la feuillure avant 14B de l'ouvrant arrière 10 de la caisse 10, par un pivotement des ouvrants 8, 10 autour de leurs points de pivotement grâce à leurs charnières 12 disposées respectivement au niveau de la feuillure avant 14A pour l'ouvrant avant 8 et de la feuillure arrière 16B pour l'ouvrant arrière 10.

Une déformation de la portion élastiquement déformable 20 correspond à son passage d'une première configuration de repos à une deuxième configuration rétractée, et inversement à son passage de la deuxième configuration rétractée à la première configuration de repos. Un passage de la portion élastiquement déformable 20 de sa première configuration de repos à sa deuxième configuration rétractée est illustré à la figure 3, les ouvrants 8, 10 étant dans leur position fermée dans la première configuration de repos et dans leur état intermédiaire dans la deuxième configuration rétractée. De façon générale, dans la première position des ouvrants 8, 10 la portion élastiquement déformable 20 est dans la première configuration de repos, dans leur position intermédiaire elle est dans sa deuxième configuration rétractée, et dans la deuxième position des ouvrants 8, 10 elle est de nouveau dans sa première configuration de repos. Une alternance entre ces différentes configurations de la portion élastiquement déformable 20 sera détaillée par la suite.

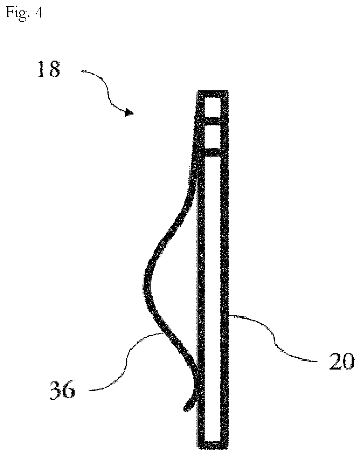

Une forme de la portion élastiquement déformable 20 diffère selon des variantes de réalisation. La portion élastiquement déformable 20 est représentée au sein de la feuillure avant 14B de l'ouvrant arrière 10 selon une première variante de réalisation aux figures 2 et 3, et elle est illustrée selon une deuxième variante de réalisation à la figure 4.

Dans la première variante de réalisation, la portion élastiquement déformable 20 comprend un doigt d'éjection 24. Ce doigt d'éjection 24 présente une première extrémité 26 orientée vers la feuillure avant 14B de l'ouvrant arrière 10 et une deuxième extrémité 28 orientée vers sa feuillure arrière 16B. En d'autres termes, la première extrémité 26 du doigt d'éjection 24 est plus proche de la première extrémité longitudinale 2 du véhicule automobile 1, tandis que sa deuxième extrémité 28 est plus proche de la deuxième extrémité longitudinale 6 de celui-ci.

Le doigt d'éjection 24 correspond à une partie de la portion élastiquement déformable 20 qui est mobile. Le doigt d'éjection 24 est par exemple un ressort ou bien une tige motorisée. Lorsque le doigt d'éjection 24 est un ressort, la portion élastiquement déformable 20 est dans sa première configuration de repos lorsque le ressort est détendu, et au contraire elle est dans sa deuxième configuration rétractée lorsque le ressort est comprimé. Lorsque le doigt d'éjection 24 est une tige motorisée, la portion élastiquement déformable 20 est dans sa première configuration de repos lorsqu'un moteur a poussé la première extrémité 26 de la tige en direction de la première extrémité longitudinale 2 du véhicule automobile 1, et inversement la portion élastiquement déformable 20 est dans sa deuxième configuration rétractée lorsque le moteur a ramené la première extrémité 26 de la tige en direction de la deuxième extrémité longitudinale 4 du véhicule automobile 1. Dans les deux cas, dans la deuxième configuration rétractée de la portion élastiquement déformable 20 le doigt d'éjection 24 est au moins partiellement rétracté au sein d'une épaisseur de l'ouvrant arrière 10, voire totalement rétracté au sein de cette épaisseur, une telle épaisseur correspondant à un volume entre une tôle intérieure 30 et une tôle extérieure 32 de l'ouvrant arrière 10.

Dans la variante de réalisation des figures 2 et 3, la première extrémité 26 du doigt d'éjection 24 est porteuse d'un galet tournant 34. Ce galet tournant 34 présente un axe de rotation sensiblement parallèle à la direction verticale, c'est-à-dire sensiblement perpendiculaire au sol sur lequel repose le véhicule automobile 1. Le galet tournant 34 est configuré pour rouler contre la portion de frottement 22 dans la position intermédiaire des ouvrants 8, 10, à savoir lors du passage de ces ouvrants 8, 10 de leur première position fermée à leur deuxième position ouverte. On comprend ici que le galet tournant 34 correspond à la partie de la portion élastiquement déformable 20 qui coopère avec cette portion de frottement 22.

Dans la variante de réalisation de la figure 4, la portion élastiquement déformable 20 correspond à une lame ressort 36. La portion élastiquement déformable 20 est dans sa première configuration de repos lorsque la lame ressort 36 présente une forme bombée, comme visible sur la figure 4, et elle est dans sa deuxième configuration rétractée lorsque la lame ressort est aplatie.

Un procédé d'ouverture des ouvrants 8, 10 à l'aide du dispositif de gestion de contact 18 en vue de la sortie d'un passager du véhicule automobile 1 va maintenant être décrit. Au début du procédé d'ouverture, l'ouvrant avant 8 et l'ouvrant arrière 10 sont tous deux dans leur première position ou position fermée. La portion élastiquement déformable 20 du dispositif de gestion de contact 18 est alors dans sa première configuration de repos et elle est au contact de la portion de frottement 22.

Afin de s'extraire du véhicule automobile 1, le passager déverrouille les serrures des ouvrants 8, 10 en actionnant le dispositif de verrouillage et de déverrouillage des ouvrants 8, 10 évoqué précédemment, par exemple la poignée intérieure du véhicule automobile 1. Les ouvrants 8, 10 passent alors de leur première position fermée à leur position intermédiaire dans laquelle ils ne sont plus en prise l'un dans l'autre mais sont toujours au contact l'un de l'autre.

Afin de parvenir à la deuxième position ouverte des ouvrants 8, 10, le passager effectue une poussée sur l'ouvrant 8, 10 à côté duquel il est assis. Pour un passager arrière, la poussée est effectuée sur l'ouvrant arrière 10. L'ouvrant arrière 10 chasse alors l'ouvrant avant 8, la portion élastiquement déformable 20 frottant contre la portion de frottement 22. Au cours d'un tel frottement, qui correspond pour les ouvrants 8, 10 à leur position intermédiaire, la portion élastiquement déformable 20 est comme cela est particulièrement visible à la figure 3 dans sa deuxième configuration rétractée.

Dans la première variante de réalisation des figures 2 et 3, dans la position intermédiaire des ouvrants 8, 10 le galet tournant 34 roule le long de la feuillure arrière 16A de l'ouvrant avant 8, en glissant de sa tôle intérieure 30 à sa tôle extérieure 32. Le doigt d'éjection 24 porteur du galet tournant 34 se rétracte au sein de l'épaisseur de l'ouvrant arrière 10 au fur et à mesure du rapprochement du galet tournant 34 vers la tôle extérieure 32. Dans la deuxième variante de réalisation de la figure 4, la lame ressort 36 s'aplatit au fur et à mesure de ce rapprochement.

Lorsque la poussée de l'ouvrant arrière 10 sur l'ouvrant avant 8 est suffisante, les ouvrants 8, 10 se séparent l'un de l'autre et prennent alors leur deuxième position ouverte. En l'absence de contrainte ou de pression exercée contre la portion de frottement 22, la portion élastiquement déformable 20 reprend sa première configuration de repos. Le passager peut alors s'extraire du véhicule automobile 1.

La présente invention propose ainsi un véhicule automobile au sein duquel un dispositif de gestion de contact est capable de gérer les frottements entre deux ouvrants antagonistes du véhicule, de sorte à limiter voire à supprimer des risques de détérioration des ouvrants liés à leurs frottements relatifs.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Véhicule automobile (1) comprenant une caisse (6) et au moins deux ouvrants (8, 10) latéraux antagonistes montés sur la caisse (6) parmi lesquels un ouvrant avant (8) et un ouvrant arrière (10), ces ouvrants (8, 10) étant configurés pour prendre une première position dans laquelle ils sont fermés et une deuxième position dans laquelle ils sont ouverts, le véhicule automobile (1) comprenant un dispositif de gestion d'un contact (18) entre les ouvrants (8, 10) comprenant au moins une portion élastiquement déformable (20) solidaire de l'un des ouvrants (8, 10), la portion élastiquement déformable (20) étant configurée pour éloigner les ouvrants (8, 10) l'un par rapport à l'autre.

2. Véhicule automobile (1) selon la revendication précédente, dans lequel la portion élastiquement déformable (20) présente une première configuration de repos et une deuxième configuration rétractée, la portion élastiquement déformable (20) passant au moins de sa première configuration à sa deuxième configuration lors du passage des ouvrants (8, 10) de leur première position à leur deuxième position.

3. Véhicule automobile (1) selon l'une quelconque des revendications précédentes, dans lequel l'ouvrant (8, 10) dont est solidaire la portion élastiquement déformable (20) comprend une feuillure avant (14, 14A, 14B) et une feuillure arrière (16, 16A, 16B), la portion élastiquement déformable (20) étant solidaire de l'une des feuillures (14, 14A, 14B, 16, 16A, 16B).

4. Véhicule automobile (1) selon la revendication précédente, dans lequel la portion élastiquement déformable (20) est solidaire de la feuillure avant (14B) de l'ouvrant arrière (10).

5. Véhicule automobile (1) selon la revendication 3, dans lequel la portion élastiquement déformable (20) est solidaire de la feuillure arrière (16A) de l'ouvrant avant (8).

6. Véhicule automobile (1) selon l'une quelconque des revendications précédentes, dans lequel le dispositif de gestion de contact (18) comprend une portion de frottement (22) destinée à coopérer, lors du passage des ouvrants (8, 10) de leur première position à leur deuxième position, avec la portion élastiquement déformable (20).

7. Véhicule automobile (1) selon la revendication précédente en combinaison avec la revendication 4, dans lequel l'ouvrant avant (8) comprend une feuillure avant (14A) et une feuillure arrière (16A) en regard de la feuillure avant (14B) de l'ouvrant arrière (10), la portion de frottement (22) étant solidaire de la feuillure arrière (16A) de l'ouvrant avant (8).

8. Véhicule automobile (1) selon la revendication 6 en combinaison avec la revendication 5, dans lequel l'ouvrant arrière (10) comprend une feuillure arrière (16B) et une feuillure avant (14B) en regard de la feuillure arrière (16A) de l'ouvrant avant (8), la portion de frottement (22) étant solidaire de la feuillure avant (14B) de l'ouvrant arrière (10).

9. Véhicule automobile (1) selon l'une quelconque des revendications précédentes, dans lequel la portion élastiquement déformable (20) comprend un doigt d'éjection (24).

10. Véhicule automobile (1) selon l'une quelconque des revendications précédentes, dans lequel la portion élastiquement déformable (20) comprend un ressort.

11. Véhicule automobile (1) selon la revendication 9, dans lequel le doigt d'éjection (24) est motorisé.

12. Véhicule automobile (1) selon l'une quelconque des revendications 10 et 11, dans lequel la portion élastiquement déformable (20) comprend un galet tournant (34) disposé à une extrémité (26) du doigt d'éjection (24).
